# FASCICULE DE BREVET EUROPEEN

(11) **EP 2 936 282 B1**
(45) Date de publication et mention de la délivrance du brevet: **08.05.2019**
(21) Numéro de dépôt: 13821852.4
(22) Date de dépôt: 18.12.2013
(51) Int. Cl.: G06F 3/01, G06F 3/03

(54) **MODULE D' INTERFACE**
SCHNITTSTELLENMODUL
INTERFACE MODULE

(30) Priorité: 21.12.2012 FR 1203576
(43) Date de publication de la demande: 28.10.2015
(73) Titulaire: DAV, 94046 Créteil Cedex (FR)
(72) Inventeur: AUBRY, Anthony, F-94046 Créteil Cedex (FR)
(74) Mandataire: Pothmann, Karsten
(86) Numéro de dépôt international: PCT/FR2013/000349
(87) Numéro de publication internationale: WO 2014/096570

(56) Documents cités:
- WO-A1-2011/069148
- US-A1- 2009 167 719

## Description

La présente invention concerne un module d'interface, en particulier pour l'habitacle d'un véhicule automobile et le contrôle de fonctions de ce dernier, en particulier à capteur de geste pour la détection et l'interprétation à distance d'un geste de l'utilisateur.

Pour le contrôle des fonctions d'un véhicule telles que l'assistant de navigation, l'illumination de l'habitacle, l'air conditionné ou l'autoradio, il est connu d'utiliser des modules d'interface utilisant un capteur_de geste.

Afin d'augmenter le nombre de fonctions contrôlées par un module d'interface, il est connu de combiner dans un même module d'interface un capteur de geste et un capteur d'appui tel qu'une surface tactile.

Cependant, des conflits sont susceptibles de survenir entre les gestes à interpréter pour l'exécution d'une commande associée et les mouvement d'approche de l'utilisateur pour appuyer sur le capteur d'appui ou de retrait suite à un tel appui.

US 2009/167719 A1 divulgue un procédé d'utilisation de la détection de proximité pour détecter et suivre le mouvement d'un objet détectable qui effectue un geste dans un volume tridimensionnel d'espace dans un volume de détection d'un pavé tactile sensible à la proximité.

WO2011/069148 A1 divulgue des procédés et systèmes de détection de position à l'aide d'un volume interactif.

Afin de répondre au moins partiellement aux besoins précédemment mentionnés, l'invention a pour objet un module d'interface, comprenant :
- un capteur de geste, apte à détecter et interpréter l'exécution d'un geste par un utilisateur dans un espace de détection ledit espace de détection comprenant une zone active et une zone morte,
- un capteur d'appui apte à détecter un appui de l'utilisateur,
- une unité de contrôle configurée pour exécuter au moins une commande en fonction du geste détecté et interprété,
dans lequel :
- le capteur de geste est configuré pour détecter si le geste est effectué en position distale ou proximale par rapport à une distance de geste définissant une frontière de geste entre une zone active et une zone morte,
- et en ce que l'unité de contrôle est configurée pour ignorer au moins partiellement un geste détecté s'il est exécuté au moins partiellement dans la zone morte ledit geste étant alors interprété comme un mouvement d'approche pour appuyer sur le capteur d'appui.

L'introduction de la zone morte permet de différencier les gestes à associer à l'exécution d'une commande et les gestes d'approche ou de retrait suite à un appui.

Le module d'interface peut en outre présenter une ou plusieurs des caractéristiques, prises seules ou en combinaison.

L'unité de contrôle est configurée pour décomposer le geste en mouvements élémentaires et pour ignorer les mouvements élémentaires exécutés dans la zone morte. Ce mode de traitement permet de garder un maximum de gestes valides

L'unité de contrôle est configurée pour ignorer totalement ledit geste si celui-ci est au moins partiellement exécuté dans la zone morte.

L'unité de contrôle est configurée pour introduire un temps de latence entre la détection d'un geste et l'exécution de la commande associée, et lorsque les moyens de positionnement détectent un geste dans la zone morte, les commandes associées à des gestes détectés et non encore exécutées sont annulées. Le temps de latence permet d'écarter encore plus de gestes d'approche potentiels.

L'unité de contrôle est configurée pour que, lorsque le capteur de geste détecte un passage de la zone morte à la zone active de l'élément de commande, les gestes détectés par le capteur de geste soient ignorés pendant un second temps de latence.

La distance de geste est d'environ dix à cinquante millimètres. Cet ordre de grandeur contient la plupart des gestes de retrait et d'approche tout en permettant de garder le plus grand espace de détection de geste actif.

Une partie du capteur de geste est configurée pour former un capteur de proximité, ledit capteur de proximité étant configuré pour détecter si le geste est effectué en position distale ou proximale par rapport à la distance de geste. Le capteur de proximité est potentiellement plus rapide pour acquérir la position d'exécution du geste.

L'unité de contrôle est reliée à des capteurs environnementaux et est configurée pour modifier la position de la frontière de geste en fonction d'un signal émanant des capteurs environnementaux. Ceci permet une gestion en temps réel et intelligente des zones en fonction des situations de conduite (haute vitesse, nuit, fatigue du conducteur, etc.).

Les capteurs environnementaux comportent l'un au moins des éléments suivants : un capteur de vitesse de déplacement d'un véhicule, un capteur de direction du regard de l'utilisateur, un capteur de luminosité ambiante, un accéléromètre.

Il comporte une pluralité de modules de capteurs, comprenant chacun au moins un capteur de geste est configuré pour détecter si le geste est effectué en position distale ou proximale par rapport à une distance de geste définissant une frontière de geste entre une zone active et une zone morte, lesdits modules de capteurs étant orientés selon des axes différents. Ceci permet une gestion de la zone morte en trois dimensions.

Il est destiné à être intégré dans un habitacle de véhicule automobile et il comporte deux modules de capteurs, dont l'un des axes est orienté en direction d'un conducteur du véhicule, et le second axe est orienté en direction d'un passager du véhicule. Cet exemple de géométrie 3D est ergonomique pour habitacle de véhicule, avec un minimum de matériel impliqué.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre schématiquement un module d'interface selon un premier mode de réalisation de l'invention,
- la figure 2 montre un découpage en zones de l'espace de détection au moyen du module d'interface de la figure 1,
- la figure 3 montre un module de capteurs pour l'utilisation dans un module d'interface selon l' invention,
- la figure 4 montre schématiquement un module d'interface comportant une pluralité de modules de capteurs.

Sur toutes les figures, les mêmes références se rapportent aux mêmes éléments.

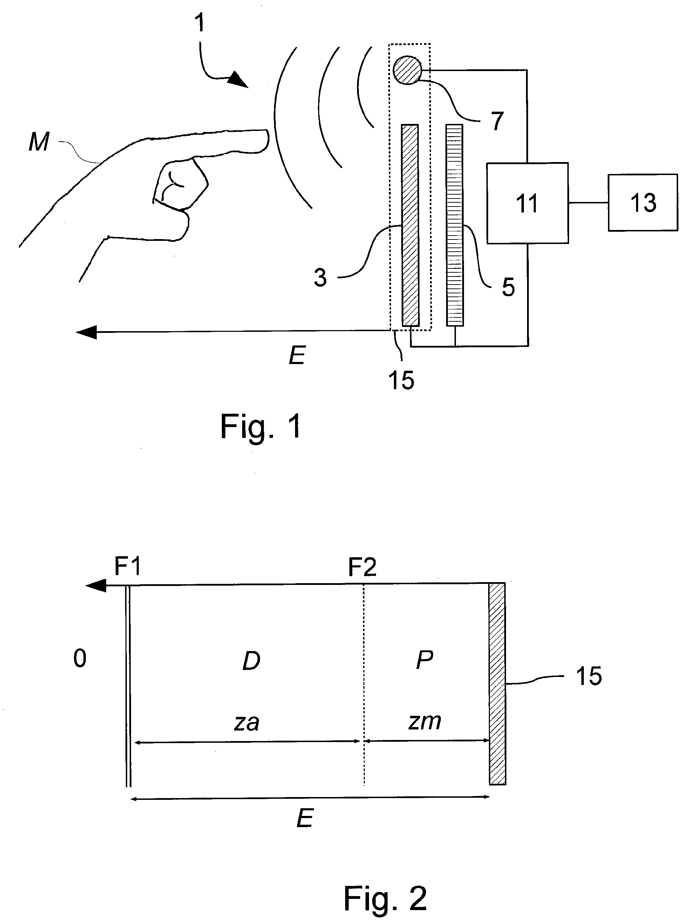

En figure 1 est montré de façon schématique un module d'interface selon un mode de réalisation particulier de l'invention.

Le module d'interface 1 comporte ici un capteur d'appui 3, ici une surface tactile transparente et placée sur un écran d'affichage 5.

Ledit capteur d'appui 3 est configuré pour détecter un appui d'un utilisateur dans le cadre de la navigation dans un menu affiché sur l'écran d'affichage 5, en particulier pour le contrôle de fonctions du véhicule, telles que l'air conditionné, un autoradio et/ou l'assistance de navigation.

La surface tactile peut par exemple être une surface tactile résistive ou capacitive, et l'écran un écran d'affichage à cristaux liquide ou diodes électroluminescentes.

En alternative, le capteur d'appui 3 peut être un capteur capacitif, auquel cas l'écran d'affichage 5 est soit situé ailleurs que derrière le capteur d'appui 3 qui est alors opaque, soit inexistant.

Dans ce qui suit, les qualités de distal et proximal sont évaluées par rapport au module d'interface 1, en particulier à la surface qu'il présente à l'utilisateur, et à l'axe dirigé par une normale à cette surface.

Le module d'interface 1 comprend en outre un capteur de geste 7. Ce capteur de geste 7 est disposé de sorte à détecter un élément de commande *M*, tel qu'une partie du corps de l'utilisateur (en particulier sa main ou une partie de sa main) ou un ustensile formant repère (par exemple un stylet avec une surface réfléchissante ou un émetteur lumineux), entrant dans un espace de détection *E* situé en vis-à-vis de la surface tactile 3 et y exécutant un mouvement correspondant à un geste spécifique, tel qu'un balayage, une rotation ou un pointage du doigt.

Le capteur de geste 7 est en particulier configuré pour détecter l'exécution d'un geste par l'utilisateur dans ledit espace de détection *E* en vis-à-vis de la surface tactile 3. Le capteur peut en particulier être configuré pour capturer et analyser des champs de vecteurs correspondant au déplacement dudit élément entre deux captures d'image rapprochées dans le temps, et pour évaluer des propriétés dudit geste, par exemple sa position, la forme et la posture de l'élément l'exécutant, ou la vitesse d'exécution.

Le capteur de geste 7 peut notamment comporter une pluralité de diodes infra-rouge, émettant un signal pulsé, et des matrices de capteurs CCD (dispositifs à transfert de charge) pour l'acquisition d'images.

Ledit capteur de geste 7 est en particulier configuré pour détecter si l'exécution du geste a lieu en position distale ou proximale par rapport à une distance de geste, d'environ dix à cinquante millimètres, paramétrable définissant une frontière de geste F2 (voir figure 2), qui prend ici la forme d'un plan sensiblement parallèle à la surface tactile 3.

Les capteurs 7 et 3 ainsi que l'écran 5 sont reliés à une unité de contrôle 11 qui en contrôle le fonctionnement. Celle-ci peut notamment comprendre tout ou partie des moyens de traitement d'image utilisés pour détecter, analyser et positionner le geste et/ou l' élément de commande *M*.

En particulier, l'unité de contrôle 11 est configurée pour exécuter des commandes spécifiques en fonction des propriétés du geste analysé. Dans l'exemple en figure 1, l' unité de contrôle est reliée à des capteurs environnementaux 13, qui mesurent ou détectent des paramètres du véhicule, du conducteur et/ou de l'environnement extérieur, afin d'adapter les commandes aux paramètres mesurés ou détectés.

Les capteurs environnementaux 13 peuvent par exemple comporter un capteur de la vitesse du véhicule, un capteur de luminosité intérieure et/ou extérieure, un capteur de la direction du regard de l'utilisateur, un accéléromètre.

Enfin l'unité de contrôle 11 peut prendre en compte les tâches en cours dans le module d'interface 1, et la valeur des vecteurs de déplacement de l'élément mesurés par le capteur de geste 7, pour ajuster la largeur des zones aux temps d'éveil et d'activation des éléments précédemment mentionnés et à la vitesse de l'élément détecté.

L'unité de contrôle 11 peut aussi prendre en compte des événements entrants tels qu'un appel téléphonique, un signal radio (flash informatif ou rapports d'état des routes) ou autres.

En figure 1, les capteurs de geste 7 et d'appui 3 sont représentés groupés au sein d'un module de capteurs 15.

La figure 2 illustre le fonctionnement du capteur de geste 7.

En figure 2 est représenté le module de capteurs 15, à partir duquel s'étend l'espace de détection *E* jusqu'à une certaine distance définissant une frontière distale F1, ici plane, et au delà de laquelle les gestes ne sont plus détectés ou interprétés.

Cette distance correspond soit à la limite physique de détection imposée par le capteur de geste 7, par exemple du fait de la sensibilité des capteurs optiques et de la puissance des diodes infra-rouge, soit à une limitation artificielle au moyen de seuils de détection paramétrés via l'unité de contrôle 11 afin de limiter la prise en compte de signaux parasites.

Le capteur de geste 7 est en outre configuré pour détecter si le geste est effectué en position distale ou proximale par rapport à une distance paramétrable, en particulier par l'unité de contrôle 11, définissant une frontière de geste F2.

Dans ce mode de réalisation, l'unité de contrôle 11 est en particulier configurée pour isoler une position d'exécution du geste au moyen du capteur de geste 7 et pour positionner ladite position d'exécution isolée par rapport à la distance paramétrable définissant la frontière de geste F2.

Cette frontière de geste F2 sépare l'espace de détection *E* en une zone morte *zm,* située entre le capteur d'appui 3 et ladite frontière de geste F2, et une zone active *za*, située entre ladite frontière F2 et la frontière distale F1.

Indépendamment de l'interprétation des propriétés du geste détecté (forme, direction, vitesse d'exécution), le capteur de geste 7 est configuré de sorte à se trouver dans un des trois états suivant :
- 0, correspondant à l'absence de geste exécuté dans l'espace de détection *E*,
- *D*, correspondant à la détection de l'exécution d'un geste dans la zone active *za,*
- *P*, correspondant à la détection de l'exécution d'un geste dans la zone morte *zm.*

La frontière de geste F2 peut être déplacée, en particulier par l'unité de contrôle 11 par exemple en changeant la paramétrisation de valeurs seuils (luminosité réfléchie, taille en pixels détectée de l'élément de commande *M*) du capteur de geste 7.

L'unité de contrôle 11 est configurée selon un premier mode de réalisation pour ignorer simplement et totalement un geste détecté s'il est exécuté au moins partiellement dans la zone morte *zm,* ledit geste étant alors interprété comme un mouvement d'approche pour appuyer sur le capteur d'appui 3.

Selon un second mode de réalisation, l'unité de contrôle 11 peut être configurée pour acquérir les propriétés d'un geste détecté par traitement du signal de capteurs optiques du module de capteurs 1, et pour retirer après analyse toutes les composantes dudit geste situées dans la zone morte *zm.* Ceci permet une acquisition complète des gestes même proches de la zone morte *zm.*

Par exemple, le geste peut être décomposé en mouvements élémentaires mesurés entre deux images successives capturées par les capteurs optiques. Ces mouvement élémentaires sont alors positionnés par rapport à la frontière intermédiaire.

L'unité de contrôle 11 peut alors avantageusement être configurée pour ignorer les mouvements élémentaires situés dans la zone morte *zm*.

En outre, selon un troisième mode de réalisation, l'unité de contrôle 11 peut être configurée pour introduire un temps de latence entre la détection d'un geste par le capteur de geste 7 et l'exécution de la commande associée. Lorsqu'un geste est détecté dans la zone morte *zm,* les commandes associées à des gestes détectés et non encore exécutées sont annulées.

Le temps de latence introduit doit alors être choisi comme un compromis entre un temps suffisamment long pour éviter la prise en compte de gestes non désirés, et la perception qu'a l'utilisateur dudit temps de latence, qui peut en particulier être vu comme une gêne.

Un temps typiquement de l'ordre de dix à cent-cinquante millisecondes, par exemple soixante-dix millisecondes, est indiqué.

Un second temps de latence, en particulier du même ordre de grandeur, peut être introduit lors de la sortie de l'élément de commande *M* de la zone morte *zm.* Pour ce faire, l'unité de contrôle 11 est configurée pour que, lorsque le capteur de geste 7 détecte un passage de la zone morte *zm* à la zone active *za* de l'élément de commande *M*, les gestes détectés par le capteur de geste 7 soient ignorés pendant un temps correspondant audit second temps de latence.

Ce second temps de latence permet à l'utilisateur de repositionner l'élément de commande *M* à distance pour effectuer un geste à distance, sans que le geste d'éloignement soit détecté et interprété.

Par exemple, dans le cas d'un module d'interface pour habitacle de véhicule automobile, si une haute vitesse du véhicule (par exemple plus de cinquante ou soixante-dix kilomètres par heure) est détectée au moyen des capteurs environnementaux 13, la zone morte *zm* peut être étendue.

De même, si le véhicule est détecté à l'arrêt, et/ou s'il est détecté que le passager est en train d'exécuter les gestes, la zone morte peut être réduite, et le temps de latence introduit.

En outre ou en alternative, si l'unité de contrôle établit par exemple au moyen d'un accéléromètre des capteurs environnementaux 13 que le véhicule est sujet à des secousses ou accélérations importantes, l'étendue de la zone morte *zm* peut être agrandie.

En outre ou en alternative, si l'unité de contrôle établit par exemple au moyen d'un capteur de la direction du regard de l'utilisateur ou d'un capteur de luminosité ambiante que l'utilisateur effectue des gestes distants en aveugle, l'étendue de la zone morte *zm* peut être réduite.

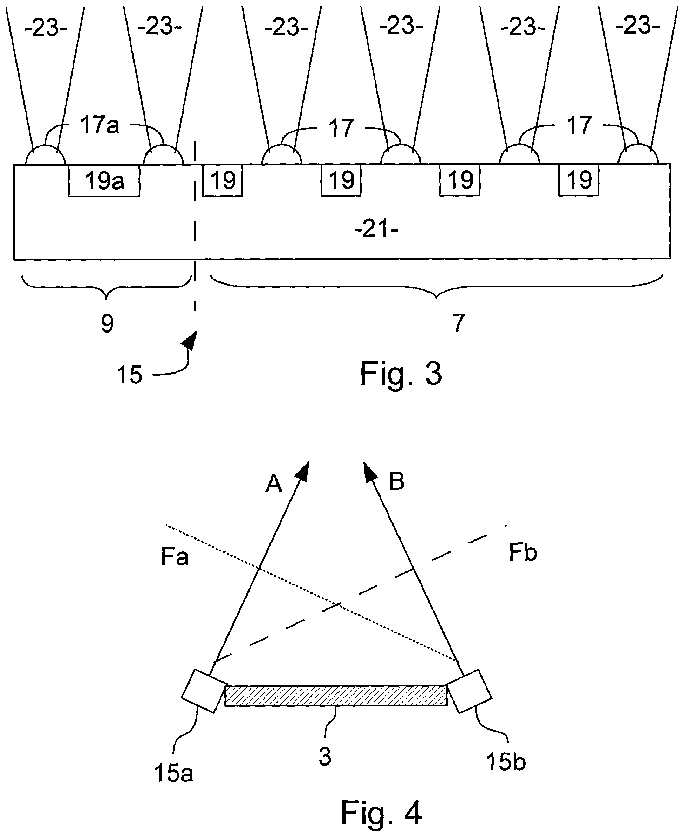

La figure 3 montre un mode de réalisation de module de capteur 15 pour un module d'interface, comprenant ici un capteur de proximité 9.

La figure 3 montre un mode de réalisation d'un module de capteurs 15, comprenant une pluralité d'émetteurs 17 infra-rouge, ici des diodes électroluminescentes infra-rouge, et une pluralité de capteurs optiques 19, par exemple des matrices de capteurs CCD (à transfert de charge). Les émetteurs 17 et les capteurs optiques 19 sont en particulier portés par un même support 21.

Les diodes 17 sont disposées les unes à côté des autres, pointant leurs cônes d'illumination 23 dans la direction de l'espace de détection E Les capteurs optiques 19 sont disposés chacun entre deux diodes 17 consécutives, et configurés pour recevoir la lumière venant de l'élément à détecter qui réémet une partie de la lumière des diodes 17.

Le support 21 des éléments précédemment mentionnés est par exemple une carte à circuit imprimé, avec un corps en résine ou matière plastique ou composite, pouvant porter en outre au moins une partie de l'électronique de traitement d'image (processeurs, unités de mémoire, unités de comparaison d'images successives, etc.), ainsi que de l'unité de contrôle 11.

En particulier, un cache (non représenté), transparent au moins à la gamme spectrale des diodes, peut être placé devant les diodes 17 afin de protéger et d'intégrer dans l'habitacle lesdites diodes 17 ainsi que les capteurs optiques 19.

Dans le mode de réalisation schématiquement représenté, une portion du capteur de geste 7, ici la portion 17a des diodes 17 et une portion 19a des capteurs optiques 19 est dédiée à la détection de proximité, et forme donc un capteur de proximité 9.

En alternative, les émetteurs optiques 17 et capteurs optiques 19 peuvent être utilisés tour-à-tour pour la détection de proximité et la détection de geste par alternances dans le temps d'au moins une partie d'entre eux.

Ainsi, les deux capteurs 7, 9 respectivement de geste et de proximité sont réunis sur un même support physique 21, qui est aisément assemblé et intégré dans l'habitacle du véhicule, et une seule fenêtre ou un seul cache transparent par module de capteur 15 est requis.

Le capteur de proximité 9 est configuré pour situer dans l'espace de détection *E* la position de l'élément de commande *M* en particulier par rapport à la distance définissant la frontière de geste F2.

Le capteur de proximité 9 peut par exemple comparer l'intensité de la lumière de diodes réfléchie par l'élément de commande *M* à des valeurs seuil, ou bien détecter l'intersection d'un ou plusieurs faisceaux infra-rouge par ledit élément de commande *M*.

En particulier le capteur de proximité 9 ne requiert qu'un traitement d'images instantanées et de résolution potentiellement plus grossières, notamment par rapport au fonctionnement normal du capteur de geste 7 qui requiert le traitement d'images successives de plus haute résolution pour isoler les mouvements à interpréter comme gestes.

Le capteur de proximité 9 requiert donc des capacités de traitement moindres que le capteur de geste 7, et est aussi potentiellement plus rapide à l'exécution.

La figure 4 montre un mode de réalisation de module d'interface 1 comportant une pluralité de modules de capteurs 15, ici deux, pourvus chacun de leurs capteurs de geste 7 et/ou de proximité 9 de l'exécution d'un geste.

Ces modules de capteurs 15 sont placés de part et d'autre de la surface tactile 3, et orientés selon deux axes différents A et B, les frontières de geste respectives Fa et Fb, sont représentées schématiquement, et sont ici des plans perpendiculaires aux axes A et B.

L'utilisation de plusieurs modules de capteurs 15 orientés dans des directions spécifiques permet un découpage en polygones de l'espace de détection *E*.

En particulier, le mode de réalisation représenté en figure 4 est avantageusement placé dans un habitacle véhicule automobile, et les axes A et B sont alors orientés pour pointer respectivement vers le conducteur et le passager du véhicule.

## Revendications

1. Module d'interface, comprenant :
- un capteur de geste (7), apte à détecter et interpréter l'exécution d'un geste par un utilisateur dans un espace de détection (*E*), ledit espace de détection comprenant une zone active (za) et une zone morte (zm),
- un capteur d'appui (3) apte à détecter un appui de l'utilisateur,
- une unité de contrôle (11) configurée pour exécuter au moins une commande en fonction du geste détecté et interprété,
dans lequel :
- le capteur de geste (7) est configuré pour détecter si le geste est effectué en position distale ou proximale par rapport à une distance de geste définissant une frontière de geste (F2) entre la zone active (*za*) et la zone morte (*zm*),
- et en ce que l'unité de contrôle (11) est configurée pour ignorer au moins partiellement un geste détecté s'il est exécuté au moins partiellement dans la zone morte (*zm*), ledit geste étant alors interprété comme un mouvement d'approche pour appuyer sur le capteur d'appui (3).

2. Module d'interface selon la revendication 1, **caractérisé en ce que** l'unité de contrôle (11) est configurée pour décomposer le geste détecté en mouvements élémentaires et pour ignorer les mouvements élémentaires exécutés dans la zone morte (*zm*).

3. Module d'interface selon la revendication 1, **caractérisé en ce que** l'unité de contrôle (11) est configurée pour ignorer totalement ledit geste détecté si celui-ci est au moins partiellement exécuté dans la zone morte (*zm*).

4. Module d'interface selon la revendication 1, **caractérisé en ce que** l'unité de contrôle (11) est configurée pour introduire un temps de latence entre la détection d'un geste et l'exécution de la commande associée, et **en ce que** lorsque le capteur de geste détecte un geste dans la zone morte (*zm*), les commandes associées à des gestes détectés et non encore exécutées sont annulées.

5. Module d'interface selon l'une des revendications précédentes, **caractérisé en ce que** l'unité de contrôle (11) est configurée pour que, lorsque le capteur de geste (7) détecte un passage de la zone morte (*zm*) à la zone active (*za*) de l'élément de commande (*M*), les gestes détectés par le capteur de geste (7) soient ignorés pendant un second temps de latence.

6. Module d'interface selon l'une des revendications 1 à 5, **caractérisé en ce que** la distance de geste est d'environ dix à cinquante millimètres.

7. Module d'interface selon l'une des revendications précédentes, **caractérisé en ce qu'**une partie du capteur de geste (7) est configurée pour former un capteur de proximité (9), ledit capteur de proximité (9) étant configuré pour détecter si le geste est effectué en position distale ou proximale par rapport à la distance de geste.

8. Module d'interface selon l'une des revendications précédentes, **caractérisé en ce que** l'unité de contrôle (11) est reliée à des capteurs environnementaux (13) et **en ce que** ladite unité de contrôle (11) est configurée pour modifier la position de la frontière de geste (F2) en fonction d'un signal émanant des capteurs environnementaux (13).

9. Module d'interface selon la revendication 8, **caractérisé en ce que** les capteurs environnementaux (13) comportent l'un au moins des éléments suivants : un capteur de vitesse de déplacement d'un véhicule, un capteur de direction du regard de l'utilisateur, un capteur de luminosité ambiante, un accéléromètre.

10. Module d'interface selon l'une des revendications précédentes, **caractérisé en ce qu'**il comporte une pluralité de modules de capteurs (15) configuré pour détecter si le geste est effectué en position distale ou proximale par rapport au distance de geste définissant la frontière de geste (F2) entre la zone active (*za*) et la zone morte (*zm*), comprenant chacun au moins le capteur de geste (7), lesdits modules de capteurs (15) étant orientés selon des axes différents (A, B).

11. Module d'interface selon la revendication 10, destiné à être intégré dans un habitacle de véhicule automobile **caractérisé en ce qu'** il comporte deux modules de capteurs (15) et qu'un des axes (A) est orienté en direction d'un conducteur du véhicule, et le second axe (B) est orienté en direction d'un passager du véhicule.

## Patentansprüche

1. Schnittstellenmodul, umfassend:
- einen Gestensensor (7), der geeignet ist, die Ausführung einer Geste durch einen Benutzer in einem Detektionsraum (*E*) zu detektieren und zu interpretieren, wobei der Detektionsraum eine aktive Zone (*za*) und eine Blindzone (*zm*) umfasst,
- einen Drucksensor (3), der geeignet ist, ein Drücken des Benutzers zu detektieren,
- eine Steuereinheit (11), die dazu konfiguriert ist, mindestens einen Befehl in Abhängigkeit von der detektierten und interpretierten Geste auszuführen,
wobei:
- der Gestensensor (7) dazu konfiguriert ist zu detektieren, ob die Geste in einer distalen oder proximalen Position in Bezug auf einen Gestenabstand ausgeführt wird, der eine Gestengrenze (F2) zwischen der aktiven Zone (*za*) und der Blindzone (*zm*) definiert,
- und dass die Steuereinheit (11) dazu konfiguriert ist, eine detektierte Geste zumindest teilweise zu ignorieren, wenn sie zumindest teilweise in der Blindzone (*zm*) ausgeführt wird, wobei die Geste dann als eine Annäherungsbewegung zum Drücken auf den Drucksensor (3) interpretiert wird.

2. Schnittstellenmodul nach Anspruch 1, **dadurch gekennzeichnet, dass** die Steuereinheit (11) dazu konfiguriert ist, die detektierte Geste in elementare Bewegungen zu zerlegen und die in der Blindzone (*zm*) ausgeführten elementaren Bewegungen zu ignorieren.

3. Schnittstellenmodul nach Anspruch 1, **dadurch gekennzeichnet, dass** die Steuereinheit (11) dazu konfiguriert ist, die detektierte Geste vollständig zu ignorieren, wenn diese zumindest teilweise in der Blindzone (*zm*) ausgeführt wird.

4. Schnittstellenmodul nach Anspruch 1, **dadurch gekennzeichnet, dass** die Steuereinheit (11) dazu konfiguriert ist, eine Latenzzeit zwischen dem Detektieren einer Geste und der Ausführung des zugeordneten Befehls einzufügen, und dass, wenn der Gestensensor eine Geste in der Blindzone (*zm*) detektiert, die den detektierten Gesten zugeordneten und noch nicht ausgeführten Befehle annulliert werden.

5. Schnittstellenmodul nach einem der vorhergehenden Ansprüche, **dadurch gekennzeichnet, dass** die Steuereinheit (11) dazu konfiguriert ist, dass, wenn der Gestensensor (7) einen Übergang des Bedienelements (*M*) aus der Blindzone (*zm*) in die aktive Zone (*za*) detektiert, die vom Gestensensor (7) detektierten Gesten während einer zweiten Latenzzeit ignoriert werden.

6. Schnittstellenmodul nach einem der Ansprüche 1 bis 5, **dadurch gekennzeichnet, dass** der Gestenabstand etwa zehn bis fünfzig Millimeter beträgt.

7. Schnittstellenmodul nach einem der vorhergehenden Ansprüche, **dadurch gekennzeichnet, dass** ein Teil des Gestensensors (7) dazu konfiguriert ist, einen Näherungssensor (9) zu bilden, wobei der Näherungssensor (9) dazu konfiguriert ist zu detektieren, ob die Geste in distaler oder proximaler Position in Bezug auf den Gestenabstand ausgeführt wird.

8. Schnittstellenmodul nach einem der vorhergehenden Ansprüche, **dadurch gekennzeichnet, dass** die Steuereinheit (11) mit Umgebungssensoren (13) verbunden ist und dass die Steuereinheit (11) dazu konfiguriert ist, die Position der Gestengrenze (F2) in Abhängigkeit von einem von den Umgebungssensoren (13) ausgehenden Signal zu ändern.

9. Schnittstellenmodul nach Anspruch 8, **dadurch gekennzeichnet, dass** die Umgebungssensoren (13) mindestens eines der folgenden Elemente umfassen: einen Fahrzeugbewegungsgeschwindigkeitssensor, einen Benutzerblickrichtungssensor, einen Raumhelligkeitssensor, einen Beschleunigungsmesser.

10. Schnittstellenmodul nach einem der vorhergehenden Ansprüche, **dadurch gekennzeichnet, dass** es eine Vielzahl von Sensormodulen (15) umfasst, die dazu konfiguriert sind zu detektieren, ob die Geste in distaler oder proximaler Position in Bezug auf den Gestenabstand ausgeführt wird, der die Gestengrenze (F2) zwischen der aktiven Zone (*za*) und der Blindzone (*zm*) definiert, wobei jedes von ihnen mindestens den Gestensensor (7) umfasst, wobei die Sensormodule (15) entlang verschiedener Achsen (A, B) ausgerichtet sind.

11. Schnittstellenmodul nach Anspruch 10, das dazu bestimmt ist, in eine Fahrgastzelle eines Kraftfahrzeugs eingebaut zu werden, **dadurch gekennzeichnet, dass** es zwei Sensormodule (15) umfasst und dass eine der Achsen (A) in Richtung eines Fahrers des Fahrzeugs ausgerichtet ist und die zweite Achse (B) in Richtung eines Insassen des Fahrzeugs ausgerichtet ist.

## Claims

1. Interface module, comprising:
- a gesture sensor (7), capable of detecting and interpreting the execution of a gesture by a user in a detection space (*E*), said detection space comprising an active zone (za) and a dead zone (*zm*),
- a pressure sensor (3) capable of detecting a pressure exerted by the user,
- a control unit (11) configured to execute at least one command on the basis of the detected and interpreted gesture,
wherein:
- the gesture sensor (7) is configured to detect whether the gesture is made in a distal or proximal position relative to a gesture distance defining a gesture boundary (F2) between the active zone (*za*) and the dead zone (*zm*),
- and in that the control unit (11) is configured to at least partially ignore a detected gesture if the gesture is executed at least partially in the dead zone (*zm*), said gesture then being interpreted as an approach movement for pressing on the pressure sensor (3).

2. Interface module according to Claim 1, **characterized in that** the control unit (11) is configured to break down the detected gesture into elementary movements and to ignore the elementary movements executed in the dead zone (*zm*).

3. Interface module according to Claim 1, **characterized in that** the control unit (11) is configured to ignore said detected gesture totally if this gesture is at least partially executed in the dead zone (*zm*).

4. Interface module according to Claim 1, **characterized in that** the control unit (11) is configured so as to introduce a latency time between the detection of a gesture and the execution of the associated command, and **in that**, when the gesture sensor detects a gesture in the dead zone (*zm*), the commands that are associated with detected gestures but have not yet been executed are canceled.

5. Interface module according to any of the preceding claims, **characterized in that** the control unit (11) is configured so that, when the gesture sensor (7) detects a movement of the command element (*M*) from the dead zone (*zm*) to the active zone (za), the gestures detected by the gesture sensor (7) are ignored during a second latency time.

6. Interface module according to any of Claims 1 to 5, **characterized in that** the gesture distance is from approximately ten to fifty millimeters.

7. Interface module according to any of the preceding claims, **characterized in that** part of the gesture sensor (7) is configured to form a proximity sensor (9), said proximity sensor (9) being configured to detect whether the gesture is made in a distal or proximal position relative to the gesture distance.

8. Interface module according to any of the preceding claims, **characterized in that** the control unit (11) is connected to environmental sensors (13) and **in that** said control unit (11) is configured to modify the position of the gesture boundary (F2) on the basis of a signal emitted by the environmental sensors (13).

9. Interface module according to Claim 8, **characterized in that** the environmental sensors (13) comprise at least one of the following elements: a vehicle speed sensor, a sensor of the direction of the user's gaze, an ambient brightness sensor, and an accelerometer.

10. Interface module according to any of the preceding claims, **characterized in that** it comprises a plurality of sensor modules (15) configured to detect whether the gesture is made in a distal or proximal position relative to the gesture distance defining the gesture boundary (F2) between the active zone (za) and the dead zone (zm), each module comprising at least the gesture sensor (7), said sensor modules (15) being oriented according to different axes (A, B).

11. Interface module according to Claim 10, intended to be integrated into a motor vehicle passenger compartment, **characterized in that** it comprises two sensor modules (15), and **in that** one of the axes (A) is oriented toward a driver of the vehicle, while the second axis (B) is oriented toward a passenger in the vehicle.
